# EUROPEAN PATENT SPECIFICATION

(11) **EP 4 603 805 B1**
(45) Date of publication and mention of the grant of the patent: **07.10.2026**
(21) Application number: 24158435.8
(22) Date of filing: 19.02.2024
(51) Int. Cl.: G01J 1/02, G01J 1/04, G01J 1/42, F21V 23/04, H05B 47/11

(54) **A LIGHT SENSOR**
EIN LICHTSENSOR
UN CAPTEUR DE LUMIÈRE

(43) Date of publication of application: 20.08.2025
(73) Proprietor: Helvar Oy Ab, 02150 Espoo (FI)
(72) Inventor: JUSLÉN, Henri, 02150 ESPOO (FI); HELLMAN, Jouko, 02150 ESPOO (FI); MÄKELÄ, Mikko, 02150 ESPOO (FI)
(74) Representative: Väänänen, Janne Kalervo

(56) References cited:
- US-A- 3 621 269
- US-A- 5 455 488
- US-A1- 2007 001 113
- US-B1- 9 681 520

## Description

### Field of the disclosure

The disclosure relates generally to illuminating engineering. More particularly, the disclosure relates to a light sensor for controlling one or more luminaires. Furthermore, the disclosure relates to a lighting system for illuminating a room or another space.

### Background

Many lighting systems comprise one or more luminaires for illuminating a space and a lighting control system that is configured to control the one or more luminaires in accordance with one or more signals produced by one or more light sensors installed on one or more walls, a ceiling, and/or other structures in the illumination-controlled space. In many cases, a light sensor is arranged to measure light reflected off a surface such as a floor or a table surface. In cases where the surface is diffuse reflective in accordance with the Lambert's cosine law, an output signal of a light sensor is indicative of average light intensity on the surface under consideration. The output signal of the light sensor can be used for controlling the one or more luminaires so that a desired light intensity on the surface is achieved even if e.g. an amount of natural light arriving at the surface may vary over time. Furthermore, controlling the one or more luminaires in accordance with the output signal of the light sensor saves energy since input power of the luminaires can be reduced when the amount of natural light increases.

A lighting system of the kind described above is however not free from challenges. One of the challenges is related to light sensors each of which is arranged to receive light from a direction determined by a position in which the light sensor is attached to a wall, a ceiling, and/or another structure in an illumination-controlled space. In some cases, it may be challenging to install each light sensor with a sufficient installation accuracy in a position such that the light sensor receives light from an appropriate direction. Furthermore, there can be a need to reinstall the light sensors in different positions in cases where furniture and/or some other circumstances in the illumination-controlled space is changed so that the light sensors would not work properly in their original positions.

Publication US5455488 describes a light-activated lamp control apparatus that comprises a thin disk-shaped switching unit positionable within a light bulb socket and a light conductor having one end attached to the disk-shaped switching unit. The light conductor is extendable through a gap between the electrically conductive inner wall of the socket and the electrically conductive outer surface of the bulb base disposed in the socket. The light conductor terminates at the opposite end in a lens for gathering ambient or other light. The switching unit has a first contact on one side for engagement with the socket center terminal, and a second contact on an opposing side for engagement with the center terminal of a light bulb. The switching unit comprises a thin circuit board having control circuitry positioned to occupy available space between the conical bulb base and the circuit board. Also mounted on the circuit board and in light communication with the light conductor is a photodetector electrically coupled to the control circuitry. The control circuitry is responsive to light communicated through the light conductor to tum the power to the second contact OFF and ON.

### Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying embodiments.

In this document, the word "geometric" when used as a prefix means a geometric concept that is not necessarily a part of any physical object. The geometric concept can be for example a geometric point, a straight or curved geometric line, a planar or non-planar geometric surface, a geometric space, or any other geometric entity that is zero, one, two, or three dimensional.

In accordance with the invention and according to claim 1, there is provided a new light sensor for controlling one or more luminaires. The light sensor according to the invention comprises:
- a sensor element configured to generate, responsive to light falling on the sensor element, a signal for controlling the one or more luminaires,
- a light guide being bendable and having a first end configured to receive light and a second end configured to direct the light to the sensor element, the light guide being configured to filter the light so that first wavelengths of the light are attenuated more than second wavelengths of the light, and
- support structures configured to support the light guide so that a reception direction from which the light guide receives light is changeable by bending the light guide, and the support structures are configured to keep the light guide in a bending position into which the light guide has been bent to receive light from a selected reception direction.

As the above-mentioned reception-direction is changeable, the light sensor can be adapted to monitor a desired part of an illumination-controlled area after the light sensor has been attached to a wall, a ceiling, or another structure. Furthermore, the changeable reception-direction is advantageous in cases where furniture and/or some other circumstances in an illumination-controlled space is changed so that the original reception direction is no more optimal.

In accordance with the invention, there is also provided a new lighting system that comprises:
- one or more luminaires,
- one or more light sensors according to the invention, each of the light sensors being responsive to light received by the light guide of the light sensor, and
- a lighting control system configured to control the one or more luminaires in accordance with one or more signals produced by the one or more light sensors.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of also un-recited features.

Furthermore, it is to be understood that the use of "a" or "an", i.e. a singular form, throughout this document does not exclude a plurality.

The features recited in dependent claims are mutually freely combinable unless otherwise explicitly stated.

### Brief description of the figures

Exemplifying and non-limiting embodiments and their advantages are explained in greater detail below with reference to the accompanying drawings, in which:
figures 1a and 1b illustrate a light sensor according to an exemplifying and non-limiting embodiment,
figures 2a and 2b illustrate a light sensor according to an exemplifying and non-limiting embodiment,
figure 3 illustrates a light sensor according to an exemplifying and non-limiting embodiment,
figure 4 illustrates a light sensor according to an exemplifying and non-limiting embodiment, and
figure 5 illustrates a lighting system according to an exemplifying and non-limiting embodiment.

### Description of exemplifying and non-limiting embodiments

The specific examples provided in the description below should not be construed as limiting the scope and/or the applicability of the accompanied claims. Lists and groups of examples provided in the description below are not exhaustive unless otherwise explicitly stated.

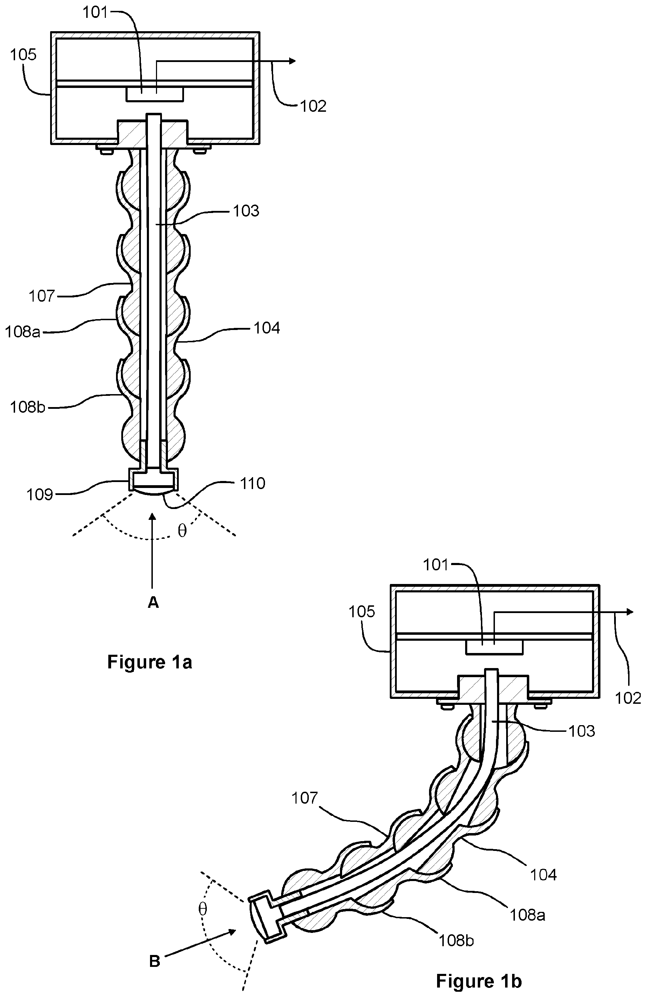

Figures 1a and 1b illustrate a light sensor according to an exemplifying and non-limiting embodiment. For the sake of illustration, some parts of the light sensor are presented with section views so that section surfaces are marked with diagonal hatching. The light sensor comprises a sensor element 101 that is configured to generate a signal 102, e.g. an electric signal, responsive to light falling on the sensor element 101. The sensor element 101 may comprise for example one or more photodiodes. The light sensor comprises a light guide 103 that is bendable and has a first end configured to receive light and a second end configured to direct the light to the sensor element 101. The light guide 103 can be for example an optical fiber, a bundle of optical fibers, a bendable hollow tube having a reflective inner wall surface, or some other suitable arrangement for conducting light. The light sensor comprises support structures 104 configured to support the light guide 103 so that a reception direction from which the light guide 103 receives light is changeable by bending the light guide, and the support structures 104 are configured to keep the light guide 103 in a bending position into which the light guide 103 has been bent to receive light from a selected reception direction. Thus, the light guide 103 can be flexed, i.e. turned, i.e. bowed to receive light from a desired reception direction. The light guide 103 and the support structures 104 may constitute a replaceable component which is non-destructively detachable from a casing 105 of the light sensor and re-attachable to the casing 105. The replaceable component can be attached to the casing 105 with e.g. one or more screws, one or more spring clips, with shape locking, and/or with some other suitable fastening arrangement.

In the exemplifying light sensor illustrated in figures 1a and 1b, the support structures 104 comprise a tube 107 surrounding the light guide 103. The tube 107 is composed of successive elements moveably joined together so that a shape of the tube 107 can be changed. In figures 1a and 1b, two of the successive elements are denoted with references 108a and 108b. Figure 1a shows an exemplifying situation where the light guide 103 receives light from a reception direction A, and figure 1b shows another exemplifying situation where the light guide 103 receives light from a reception direction B.

The exemplifying light sensor illustrated in figures 1a and 1b comprises a lens element 109 attached to the first end of the light guide 103 and configured to modify light received by the light guide 103. The lens element 109 comprises a lens 110 whose shape determines a reception angle θ shown in figures 1a and 1b. The reception direction, A in figure 1a and B in figure 1b, means a direction of a symmetry line of a reception beam. The lens element 109 can be a replaceable component which is non-destructively detachable from the first end of the light guide 103 and re-attachable to the first end of the light guide 103.

In a light sensor according to the invention, the light guide 103 is configured to filter the light so that first wavelengths of the light are attenuated substantially totally or at least more than second wavelengths of the light. For example, wavelengths belonging to the infrared "IR" range and/or wavelengths belonging to the ultraviolet "UV" range can be attenuated more than wavelengths belonging to the visible light. The light guide 103 may comprise for example an optical fiber or a bundle of optical fibers which is/are configured to attenuate some wavelengths substantially totally or at least more than other wavelengths.

In a light sensor according to an exemplifying and non-limiting embodiment, the lens element 109 comprises material configured to filter the arriving light.

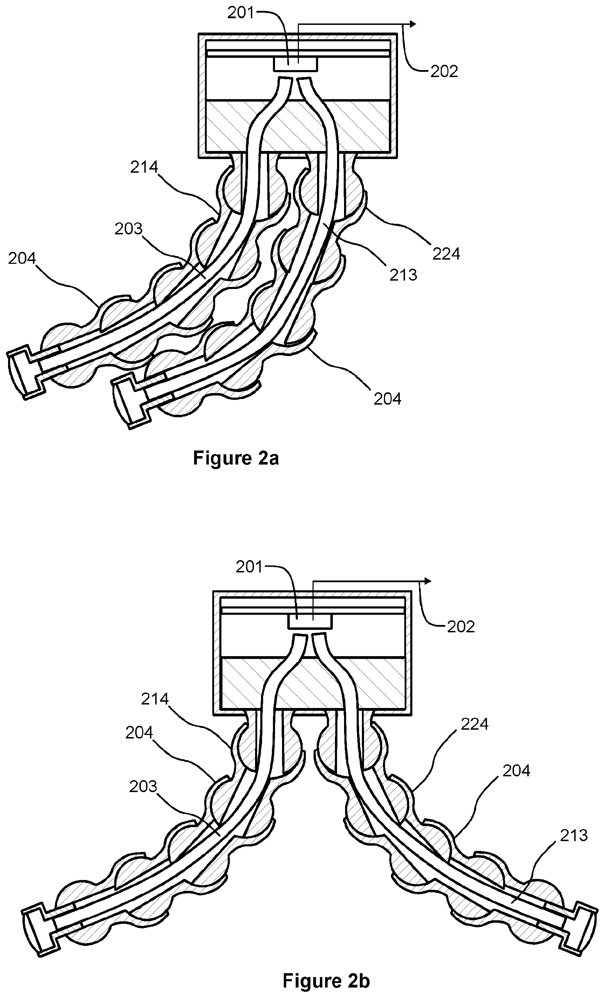

A light sensor according to an exemplifying and non-limiting embodiment comprises at least two light guides and the support structures comprise light guide -specific sections configured to support different ones of the light guides so that the reception directions from which the light guides receive light are changeable independently of each other, and the light guides are configured to direct light to a same sensor element. Figures 2a and 2b illustrate a light sensor according to an exemplifying and non-limiting embodiment of the kind mentioned above. For the sake of illustration, some parts of the light sensor are presented with section views so that section surfaces are marked with diagonal hatching. The light sensor comprises a sensor element 201 that is configured to generate a signal 202, e.g. an electric signal, responsive to light falling on the sensor element 201. The sensor element 201 may comprise for example one or more photodiodes. The light sensor comprises light guides 203 and 213 each having a first end configured to receive light and a second end configured to direct the light to the sensor element 201. Each of the light guides 203 and 213 can be for example an optical fiber, a bundle of optical fibers, or a bendable hollow tube having a reflective inner wall surface. The light sensor comprises support structures 204 configured to support the light guides 203 and 213. The support structures 204 comprise light guide -specific sections 214 and 224 such that reception directions from which the light guides 203 and 213 receive light are changeable independently of each other. Figure 2a shows an exemplifying situation where the light guides 203 and 213 are arranged receive light from a same reception direction, and figure 2b shows an exemplifying situation where the light guides 203 and 213 are arranged receive light from different reception directions.

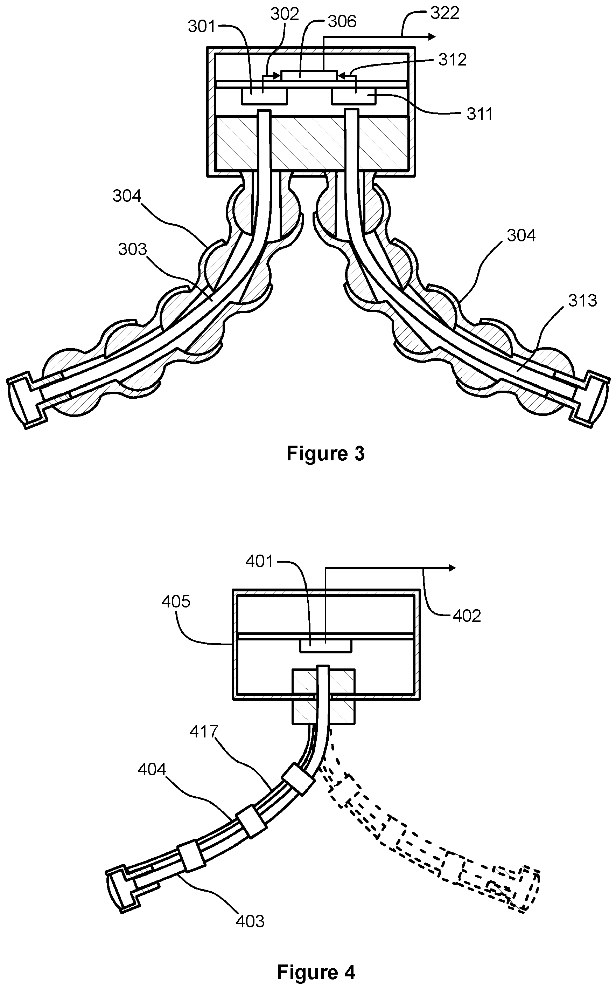

A light sensor according to an exemplifying and non-limiting embodiment comprises at least two light guides and the support structures comprise light guide -specific sections configured to support the light guides so that the reception directions from which the light guides receive light are changeable independently of each other, and the light sensor comprises at least two sensor elements and different ones of the light guides are configured to direct light to different ones of the sensor elements. Figure 3 illustrates a light sensor according to an exemplifying and non-limiting embodiment of the kind mentioned above. For the sake of illustration, some parts of the light sensor are presented with section views so that section surfaces are marked with diagonal hatching. The light sensor comprises a sensor element 301 configured to generate a signal 302, e.g. an electric signal, responsive to light falling on the sensor element 301, and a sensor element 311 configured to generate a signal 312, e.g. an electric signal, responsive to light falling on the sensor element 311. The light sensor may comprise a circuitry 306 configured to form a control signal 322, e.g. an electric control signal, as a predetermined mathematical function of the signals 302 and 312 generated by the sensor elements 301 and 311. The control signal 322 can be for example a sum of the signals 302 and 312 or a weighted sum of the signals 302 and 312. The circuitry 306 can be an analog circuitry or the circuitry 306 can be provided with analog-to-digital "AD" converters and with a digital data processing unit. The light sensor comprises a light guide 303 having a first end configured to receive light and a second end configured to direct the light to the sensor element 301, and a light guide 313 having a first end configured to receive light and a second end configured to direct the light to the sensor element 311. The light sensor comprises support structures 304 configured to support the light guides 303 and 313 so that reception directions from which the light guides 303 and 313 receive light are changeable independently of each other.

Figure 4 illustrates a light sensor according to an exemplifying and non-limiting embodiment. For the sake of illustration, some parts of the light sensor are presented with section views so that section surfaces are marked with diagonal hatching. The light sensor comprises a sensor element 401 that is configured to generate a signal 402, e.g. an electric signal, responsive to light falling on the sensor element 401. The light sensor comprises a light guide 403 that is bendable and has a first end configured to receive light and a second end configured to direct the light to the sensor element 401. The light sensor comprises support structures 404 configured to support the light guide 403 so that a reception direction from which the light guide 403 receives light is changeable by bending the light guide 403. In this exemplifying light sensor, the support structures 404 comprise a bendable elongated element 417 capable of keeping its bending position. Furthermore, the support structures comprise means for attaching an end of the elongated element 417 to a casing 405. The light guide 403 is supported on the outer surface of the bendable elongated element 417. Figure 4 shows an exemplifying bending position of the light guide 403 and the bendable elongated element 417. Another exemplifying bending position is depicted with dashed lines. The bendable elongated element 417 can be for example a wire of metal, e.g. iron, or a bar of other suitable material such that the bendable elongated element 417 is sufficiently soft for being bendable and sufficiently rigid for being able to keep the light guide 403 in its desired bending position. It is also possible that the support structures comprise e.g. an elongated element comprising parts articulated to each other with suitable joints, an air-filled support element, which, depending on the amount of air, is in a different curved position, or the support structures comprise a support element which can be stiffened to a desired position with e.g. hot air or electric current. Thus, the invention is not limited to any specific support structures to keep a bendable light guide in a desired bending position.

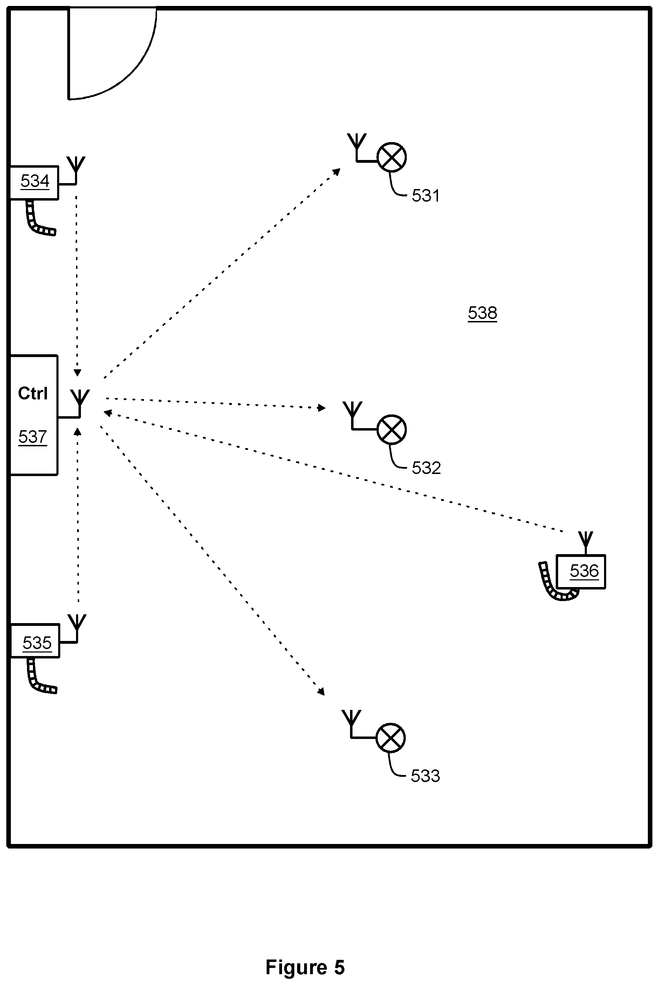

Figure 5 illustrates a lighting system according to an exemplifying and non-limiting embodiment. The lighting system comprises luminaires 531, 532, and 533 for illuminating a room 538. The lighting system comprises light sensors 534, 535, and 536 each being responsive to light received by the light sensor under consideration. Each of the light sensors 534-536 is a light sensor according to an exemplifying and non-limiting embodiment of the invention. In addition to the light sensors 534-536, the lighting system may further comprise one or more light sensors according to the prior art. The lighting system comprises a lighting control system 537 configured to control the luminaires 531-533 in accordance with signals produced by the light sensors 534-536. In this exemplifying lighting system, the lighting control system 537 is a centralized lighting control system. It is however also possible that a lighting system according to an exemplifying and non-limiting embodiment comprises a distributed lighting control system. Different ones of the light sensors 534-536 can be arranged to receive light from different parts of the room 538. For example, the light sensor 536 is arranged to receive light from above e.g. from a ceiling or a skylight window. When a light sensor is arranged to receive light from e.g. outside, a skylight window, or from another area whose lighting is not affected by the luminaires being controlled at least partly by the light sensor, the light sensor acts as a part of an open-loop control of the luminaires. When a light sensor is arranged to receive light from an area whose lighting is affected by the luminaires being controlled at least partly by the light sensor, the light sensor acts as a part of a closed-loop control of the luminaires.

One or more of the light sensors 534-536 can be provided with a servo motor such that the light sensor under consideration can be remotely controlled to change its light reception direction. A light sensor comprising a servo motor can be used e.g. for localizing the luminaires 531, 532, and 533, for finding possible dark and/or bright areas in the room 538 for controlling e.g. spotlights provided with servo motors, and/or for carrying out other control actions in the lighting system.

The specific examples provided in the description given above should not be construed as limiting the scope and/or the applicability of the appended claims. Lists and groups of examples provided in the description given above are not exhaustive unless otherwise explicitly stated. The invention is defined by the appended claims.

## Claims

1. A light sensor comprising:
- a sensor element (101, 201, 301, 311, 401) configured to generate, responsive to light falling on the sensor element, a signal (102, 202, 302, 312, 402) for controlling one or more luminaires, and
- a light guide (103, 203, 213, 303, 313, 403) being bendable and having a first end configured to receive light and a second end configured to direct the light to the sensor element,
wherein the light sensor comprises support structures (104, 204, 304, 404) configured to support the light guide so that a reception direction (A, B) from which the light guide receives light is changeable by bending the light guide, and the support structures are configured to keep the light guide in a bending position into which the light guide has been bent to receive light from a selected reception direction (A, B), **characterized in that** the light guide is configured to filter the light so that first wavelengths of the light are attenuated more than second wavelengths of the light.

2. A light sensor according to claim 1, wherein the light guide (103) and the support structures (104) constitute a replaceable component which is non-destructively detachable from a casing (105) of the light sensor and re-attachable to the casing of the light sensor.

3. A light sensor according to claim 1 or 2, wherein the light guide (203) is one of at least two light guides (203, 213) and the support structures (204) comprise light guide -specific sections (214, 224) configured to support different ones of the light guides so that the reception directions from which the light guides receive light are changeable independently of each other.

4. A light sensor according to claim 3, wherein the light guides (203, 213) are configured to direct light to the same sensor element (201).

5. A light sensor according to claim 3, wherein the sensor element (301) is one of at least two sensor elements (301, 311) and different ones of the light guides (301, 311) are configured to direct light to different ones of the sensor elements.

6. A light sensor according to claim 5, wherein the light sensor comprises a circuitry (306) configured to form a control signal for controlling the one or more luminaires, the control signal being a predetermined mathematical function of the signals generated by the sensor elements.

7. A light sensor according to any one of claims 1-6, wherein the light guide (103, 403) comprises an optical fiber or a bundle of optical fibers.

8. A light sensor according to any one of claims 1-7, wherein the support structures (104, 404) comprise a tube (107) surrounding the light guide (103).

9. A light sensor according to claim 8, wherein the tube (107) is composed of successive elements (108a, 108b) moveably joined together and allowing of a shape of the tube to be changed.

10. A light sensor according to any one of claims 1-6, wherein the support structures (404) comprise a bendable elongated element (417) capable of keeping a bending position of the bendable elongated element, and the light guide (403) is supported on an outer surface of the bendable elongated element.

11. A light sensor according to any one of claims 1-10, wherein the light sensor comprises a lens element (109) attached to the first end of the light guide and configured to modify the light received by the light guide.

12. A light sensor according to claim 11, wherein the lens element (109) is a replaceable component which is non-destructively detachable from the first end of the light guide (103) and re-attachable to the first end of the light guide.

13. A light sensor according to any one of claims 1-12, wherein the first wavelengths comprise infrared wavelengths and the second wavelengths comprise wavelengths of visible light.

14. A light sensor according to any one of claims 1-13, wherein the first wavelengths comprise ultraviolet wavelengths and the second wavelengths comprise wavelengths of visible light.

15. A lighting system comprising:
- one or more luminaires (531-533),
- one or more light sensors (534-536) each being responsive to light received by a light guide of the light sensor, and
- a lighting control system (537) configured to control the one or more luminaires in accordance with one or more signals produced by the one or more light sensors,
**characterized in that** each of the one or more light sensors is a light sensor according to any one of claims 1-14.

## Patentansprüche

1. Lichtsensor umfassend:
- ein Sensorelement (101, 201, 301, 311, 401), das konfiguriert ist, um als Reaktion auf Licht, das auf das Sensorelement fällt, ein Signal (102, 202, 302, 312, 402) zum Steuern von einer oder mehreren Leuchten zu erzeugen, und
- einen Lichtleiter (103, 203, 213, 303, 313, 403), der biegbar ist und ein erstes Ende, das konfiguriert ist, um Licht zu empfangen, und ein zweites Ende, das konfiguriert ist, um das Licht zu dem Sensorelement zu leiten, aufweist,
wobei der Lichtsensor Stützstrukturen (104, 204, 304, 404) umfasst, die konfiguriert sind, um den Lichtleiter zu stützen, so dass eine Empfangsrichtung (A, B), aus welcher der Lichtleiter Licht empfängt, durch Biegen des Lichtleiters geändert werden kann, und die Stützstrukturen konfiguriert sind, um den Lichtleiter in einer Biegeposition zu halten, in welche der Lichtleiter gebogen wurde, um Licht aus einer ausgewählten Empfangsrichtung (A, B) zu empfangen, **dadurch gekennzeichnet, dass** der Lichtleiter konfiguriert ist, um das Licht zu filtern, so dass erste Wellenlängen des Lichts stärker abgeschwächt werden als zweite Wellenlängen des Lichts.

2. Lichtsensor nach Anspruch 1, wobei der Lichtleiter (103) und die Stützstrukturen (104) eine austauschbare Komponente bilden, welche unzerstörbar von einem Gehäuse (105) des Lichtsensors abgenommen und wieder an dem Gehäuse des Lichtsensors angebracht werden kann.

3. Lichtsensor nach Anspruch 1 oder 2, wobei der Lichtleiter (203) einer von mindestens zwei Lichtleitern (203, 213) ist und die Stützstrukturen (204) lichtleiterspezifische Abschnitte (214, 224) umfassen, die konfiguriert sind, um verschiedene der Lichtleiter zu stützen, so dass die Empfangsrichtungen, aus welchen die Lichtleiter Licht empfangen, unabhängig voneinander geändert werden können.

4. Lichtsensor nach Anspruch 3, wobei die Lichtleiter (203, 213) konfiguriert sind, um Licht zu demselben Sensorelement (201) zu leiten.

5. Lichtsensor nach Anspruch 3, wobei das Sensorelement (301) eines von mindestens zwei Sensorelementen (301, 311) ist und verschiedene der Lichtleiter (301, 311) konfiguriert sind, um Licht zu verschiedenen der Sensorelemente zu leiten.

6. Lichtsensor nach Anspruch 5, wobei der Lichtsensor einen Schaltkreis (306) umfasst, der konfiguriert ist, um ein Steuersignal zum Steuern der einen oder mehreren Leuchten zu bilden, wobei das Steuersignal eine vorgegebene mathematische Funktion der Signale ist, die von den Sensorelementen erzeugt werden.

7. Lichtsensor nach einem der Ansprüche 1-6, wobei der Lichtleiter (103, 403) eine Glasfaser oder ein Bündel von Glasfasern umfasst.

8. Lichtsensor nach einem der Ansprüche 1-7, wobei die Stützstrukturen (104, 404) ein Rohr (107) umfassen, das den Lichtleiter (103) umgibt.

9. Lichtsensor nach Anspruch 8, wobei das Rohr (107) aus aufeinanderfolgenden Elementen (108a, 108b) zusammengesetzt ist, die beweglich miteinander verbunden sind und ermöglichen, dass eine Form des Rohrs geändert wird.

10. Lichtsensor nach einem der Ansprüche 1-6, wobei die Stützstrukturen (404) ein biegsames längliches Element (417) umfassen, das in der Lage ist, seine Biegeposition beizubehalten, und der Lichtleiter (403) auf einer Außenfläche des biegsamen länglichen Elements gestützt wird.

11. Lichtsensor nach einem der Ansprüche 1-10, wobei der Lichtsensor ein Linsenelement (109) umfasst, das an dem ersten Ende des Lichtleiters befestigt ist und konfiguriert ist, um das Licht, das von dem Lichtleiter empfangen wird, zu verändern.

12. Lichtsensor nach Anspruch 11, wobei das Linsenelement (109) eine austauschbare Komponente ist, welche unzerstörbar von dem ersten Ende des Lichtleiters (103) abgenommen werden kann und wieder an dem ersten Ende des Lichtleiters angebracht werden kann.

13. Lichtsensor nach einem der Ansprüche 1-12, wobei die ersten Wellenlängen Infrarotwellenlängen umfassen und die zweiten Wellenlängen Wellenlängen von sichtbarem Licht umfassen.

14. Lichtsensor nach einem der Ansprüche 1-13, wobei die ersten Wellenlängen Ultraviolettwellenlängen umfassen und die zweiten Wellenlängen Wellenlängen von sichtbarem Licht umfassen.

15. Beleuchtungssystem umfassend:
- eine oder mehrere Leuchten (531-533),
- ein oder mehrere Lichtsensoren (534-536), die jeweils auf Licht reagieren, das von einem Lichtleiter des Lichtsensors empfangen wird, und
- ein Beleuchtungssteuersystem (537), das konfiguriert ist, um die eine oder die mehreren Leuchten gemäß einem oder mehreren Signalen zu steuern, die von dem einen oder den mehreren Lichtsensoren produziert werden,
**dadurch gekennzeichnet, dass** jeder des einen oder der mehreren Lichtsensoren ein Lichtsensor nach einem der Ansprüche 1-14 ist.

## Revendications

1. Capteur de lumière comprenant :
- un élément de détection (101, 201, 301, 311, 401) configuré pour générer, en réponse à de la lumière tombant sur l'élément de détection, un signal (102, 202, 302, 312, 402) pour commander un ou plusieurs luminaires et
- un guide de lumière (103, 203, 213, 303, 313, 403) étant flexible et présentant une première extrémité configurée pour recevoir de la lumière et une deuxième extrémité configurée pour diriger la lumière vers l'élément de détection,
dans lequel le capteur de lumière comprend des structures de support (104, 204, 304, 404) configurées pour soutenir le guide de lumière de telle sorte qu'une direction de réception (A, B) depuis laquelle le guide de lumière reçoit de la lumière puisse être modifiée en pliant le guide de lumière et les structures de support sont configurées pour maintenir le guide de lumière dans une position de pliage dans laquelle le guide de lumière a été plié pour recevoir de la lumière provenant d'une direction de réception sélectionnée (A, B), **caractérisé en ce que** le guide de lumière est configuré pour filtrer la lumière de telle sorte que des premières longueurs d'onde de la lumière soient davantage atténuées que des deuxièmes longueurs d'onde de la lumière.

2. Capteur de lumière selon la revendication 1, dans lequel le guide de lumière (103) et les structures de support (104) constituent un composant remplaçable qui peut être détaché sans destruction d'un boîtier (105) du capteur de lumière et fixé à nouveau au boîtier du capteur de lumière.

3. Capteur de lumière selon la revendication 1 ou 2, dans lequel le guide de lumière (203) est un d'au moins deux guides de lumière (203, 213) et les structures de support (204) comprennent des sections spécifiques aux guides de lumière (214, 224) configurées pour soutenir différents guides de lumière de telle sorte que les directions de réception depuis lesquelles les guides de lumière reçoivent de la lumière puissent être modifiées indépendamment les unes des autres.

4. Capteur de lumière selon la revendication 3, dans lequel les guides de lumière (203, 213) sont configurés pour diriger la lumière vers le même élément de détection (201).

5. Capteur de lumière selon la revendication 3, dans lequel l'élément de détection (301) est un d'au moins deux éléments de détection (301, 311) et différents guides de lumière (301, 311) sont configurés pour diriger la lumière vers différents éléments de détection.

6. Capteur de lumière selon la revendication 5, dans lequel le capteur de lumière comprend un circuit (306) configuré pour former un signal de commande pour commander un ou plusieurs luminaires, le signal de commande étant une fonction mathématique prédéterminée des signaux générés par les éléments de détection.

7. Capteur de lumière selon une quelconque des revendications 1 à 6, dans lequel le guide de lumière (103, 403) comprend une fibre optique ou un faisceau de fibres optiques.

8. Capteur de lumière selon une quelconque des revendications 1 à 7, dans lequel les structures de support (104, 404) comprennent un tube (107) entourant le guide de lumière (103).

9. Capteur de lumière selon la revendication 8, dans lequel le tube (107) est composé d'éléments successifs (108a, 108b) reliés entre eux de manière mobile et permettant de modifier la forme du tube.

10. Capteur de lumière selon une quelconque des revendications 1 à 6, dans lequel les structures de support (404) comprennent un élément allongé flexible (417) capable de conserver une position de pliage de l'élément allongé flexible et le guide de lumière (403) est soutenu sur une surface extérieure de l'élément allongé flexible.

11. Capteur de lumière selon une quelconque des revendications 1 à 10, dans lequel le capteur de lumière comprend un élément de lentille (109) fixé à la première extrémité du guide de lumière et configuré pour modifier la lumière reçue par le guide de lumière.

12. Capteur de lumière selon la revendication 11, dans lequel l'élément de lentille (109) est un composant remplaçable qui peut être détaché de manière non destructive de la première extrémité du guide de lumière (103) et fixé à nouveau à la première extrémité du guide de lumière.

13. Capteur de lumière selon une quelconque des revendications 1 à 12, dans lequel les premières longueurs d'onde comprennent des longueurs d'onde infrarouges et les deuxièmes longueurs d'onde comprennent des longueurs d'onde de lumière visible.

14. Capteur de lumière selon une quelconque des revendications 1 à 13, dans lequel les premières longueurs d'onde comprennent des longueurs d'onde ultraviolettes et les deuxièmes longueurs d'onde comprennent des longueurs d'onde de lumière visible.

15. Système d'éclairage comprenant :
- un ou plusieurs luminaires (531-533),
- un ou plusieurs capteurs de lumière (534-536), chacun étant sensible à la lumière reçue par un guide de lumière du capteur de lumière et
- un système de commande d'éclairage (537) configuré pour commander un ou plusieurs luminaires conformément à un ou plusieurs signaux produits par un ou plusieurs capteurs de lumière,
**caractérisé en ce que** chacun du ou des capteurs de lumière est un capteur de lumière selon une quelconque des revendications 1 à 14.
